# EUROPÄISCHE PATENTSCHRIFT

(11) **EP 0 543 082 B1**
(45) Veröffentlichungstag und Bekanntmachung des Hinweises auf die Patenterteilung: **30.08.1995**
(21) Anmeldenummer: 92111300.7
(22) Anmeldetag: 03.07.1992
(51) Int. Cl.: F16F 13/00

(54) **Mehrkammer-Hydrobuchse**
Multiple chamber hydraulic bushing
Manchon hydraulique à plusieurs compartiments

(30) Priorität: 19.11.1991 DE 4137977
(43) Veröffentlichungstag der Anmeldung: 26.05.1993
(73) Patentinhaber: Firma Carl Freudenberg, 69469 Weinheim (DE)
(72) Erfinder: Hamaekers, Arno, W-6946 Gorxheimertal (DE)

(56) Entgegenhaltungen:
- EP-A- 0 300 093
- DE-A- 3 722 079
- DE-A- 3 942 655
- FR-A- 2 655 113
- PATENT ABSTRACTS OF JAPAN vol. 13, no. 420 (M-872)(3768) 19. September 1989 & JP-A-01 158 242 (TOKAI RUBBER IND)
- PATENT ABSTRACTS OF JAPAN vol. 10, no. 62 (M-460)(2119) 12. M rz 1986 & JP-A-60 108 650 (TOKAI GOMU KOGYO)
- PATENT ABSTRACTS OF JAPAN vol. 12, no. 31 (M-663)(2878) 29. Januar 1988 & JP-A-62 184 249 (TOKAI RUBBER IND.)
- PATENT ABSTRACTS OF JAPAN vol. 14, no. 410 (M-1020)(4353) 5. September 1990 & JP-A-02 159 438 (TOKAI RUBBER IND.)

## Beschreibung

Die Erfindung betrifft eine hydraulisch dämpfende Mehrkammer-Hydrobuchse, die überwiegend senkrecht zu ihrer Achsrichtung belastbar ist, umfassend zwei einander in achsparalleler Zuordnung umschließende Stützhülsen, die durch zumindest ein Federelement aus gummielastischem Werkstoff aufeinander abgestützt sind, wobei das Federelement die innere Stützhülse zumindest teilweise umschließt und zumindest zwei mit einem inkompressiblen Fluid gefüllte Kammern einander gegenüberliegend und im wesentlichen senkrecht zur Achsrichtung angeordnet sind, wobei die Kammern durch zumindest eine Verbindungsöffnung flüssigkeitsleitend miteinander verbunden sind und jeweils durch die äußere Stützhülse und eine bewegliche, der inneren Stützhülse zugewandte Kammerwand gebildet sind, die jeweils einen blähsteifen Zentralbereich und einen Randbereich aufweisen und einstückig mit dem Federelement ausgebildet sind, wobei die Zentralbereiche bei bestimmungsgemäßer Verwendung der inneren Stützhilfe jeweils einen Spalt begrenzen, der sich in axialer Richtung erstreckt.

Eine solche Hydrobuchse ist aus der DE 37 22 079 A1 bekannt. Durch die vorbekannte Hülsengummifeder mit Flüssigkeitsfüllung sollen gute Dämpfungskennwerte für niederfrequente Schwingungen erzielt werden und eine ausreichend niedrige dynamische Federrate zur Isolierung höherfrequenter Schwingungen. Zur Isolierung höherfrequenter Schwingungen mit kleinen Amplituden ist es vorgesehen, daß eine Flüssigkeitsverlagerung zwischen zwei Kammern erfolgen soll, die durch eine Verbindungsöffnung miteinander verbunden sind.

Die Verbindungsöffnung wird durch einen Spalt gebildet, der einerseits durch die äußere Stützhülse und andererseits durch radial in die Kammer vorspringende Flügel begrenzt ist. Innerhalb des Federelements sind zur Isolierung höherfrequenter Schwingungen bogenförmige Hohlräume vorgesehen, deren radiale Weite während des Betriebs der Hydrobuchse veränderlich ist.

Eine weitere Hydrobuchse ist aus der EP-OS 0 326 504 bekannt. Die vorbekannte Hydrobuchse weist eine Mehrzahl fluidgefüllter Kammern auf, die durch einen Durchlaß flüssigkeitsleitend miteinander verbunden sind. Dabei ist allerdings zu beachten, daß die Isolierung hochfrequenter Schwingungen mit kleinen Amplituden aufgrund der Bauart bedingten, kleinen Entkoppelungsfläche wenig befriedigen ist. Außerdem übertragen sich hochfrequente Schwingungen aufgrund des großflächigen Fluidkontaktes des Tragkörpers auf das Fluid und führen somit zu Verwirbelung und Erhöhung der dynamischen Federrate. Desweiteren weist die vorbekannte Hydrobuchse einen vergleichsweise komplizierten Aufbau, bestehend aus vielen Einzelteilen auf, wodurch bei der Montage eine große Anzahl von Fügevorgänge erforderlich ist. Auch die Dämpfung von niederfrequenten Schwingungen ist wenig befriedigend. In den Arbeitskammern treten ungleiche Pumpverhältnisse auf, wodurch eine Volumenaufnahme in den Kammerwänden notwendig wird, sich die Kammerwände aufblähen und damit das Fördervolumen und die erzielbare Dämpfung beeinträchtigen.

Der Erfindung liegt die Aufgabe zugrunde, die vorgenannten Nachteile zu vermeiden, insbesondere die Übertragung kleinamplitudiger, hochfrequenter Schwingungen während der bestimmungsgemäßen Verwendungen bei Dämpfung tieferfrequenter Schwingungen. Außerdem soll eine verbesserte Entkopplung kleinamplitudiger, zu isolierender und großamplitudiger zu bedämpfender Schwingungen erreicht werden sowie ein Bauteil gezeigt werden, das eine einfache und wirtschaftliche Bauweise aufweist.

Diese Aufgabe wird mit den kennzeichnenden Merkmalen von Anspruch 1 gelöst. Auf vorteilhafte Ausgestaltungen nehmen die Unteransprüche bezug.

Gemäß der Erfindung ist es vorgesehen, daß die Randbereiche rollbalgartig ausgeführt sind und der jeweilige Spalt eine radiale Weite von maximal 1 mm aufweist, so daß die Randbereiche bei Ein- bzw. Ausfederung des Hydrolagers keiner Zugbelastung ausgesetzt sind.

Im Hinblick auf eine gute Isolierung höherfrequenter, kleinamplitudiger Schwingungen ist dabei von Vorteil, daß eine gute Beweglichkeit der Kammerwände zur Isolierung höherfrequenter Schwingungen gewährleistet ist und die erfindungsgemäße Hydrobuchse eine ausgezeichnete Gebrauchsdauer aufweist. Diese Ausgestaltung bedingt eine Abkoppelung des tragenden Federkörpers im Bereich kleiner Amplituden, die in den Spalten einstellbar sind. Durch diese Ausgestaltung ist es weiterhin möglich, eine entkoppelte Hydrobuchse zu zeigen, die eine getrennte Optimierbarkeit der Hauptkriterien Federrate, Dämpfung und Dauerfestigkeit aufweist und sich durch wenige Bauteile und einfache Montage auszeichnet. Durch die erfindungsgemäße Hydrobuchse kann eine hohe Dämpfungswirkung erzielt werden.

Zur Dämpfung tieffrequenter Schwingungen mit großen Amplituden ist es vorgesehen, daß die fluidgefüllten Kammern weitgehend symmetrisch ausgebildet sind und über eine, im Bereich der äußeren Stützhülse angeordnete Verbindungsöffnung, die kanalartig ausgestaltet sein kann, miteinander verbunden sind. Die Verbindungsöffnung ist dabei so ausgelegt, daß das Flüssigkeitsvolumen bei Einleitung tieffrequenter Schwingungen eine gegenphasige Schwingung ausführt und damit eine Dämpfung bewirkt. Von hervorzuhebender Bedeutung ist, daß Kavitation innerhalb der Buchse durch ein unterdruckfreies, symmetrisches Mehrkammerdämpfsystem zuverlässig vermieden wird. Die Hydrobuchse kann im wesentlichen aus nur drei Metallteilen (innere Stützhülse, Lagerring mit Aussparungen und äußere Stützhülse) bestehen, wobei das Federelement und die äußere Stützhülse ohne axiale Vorspannung ineinandergefügt sind. Desweiteren ist von Vorteil, wenn die Kammerwände aus gummielastischem Material bestehen und bei Anschlagen an die innere Stützhülse oder die äußere Stützhülse keine störenden Geräusche verursachen.

Im Hinblick auf einen weicheren Dämpfungsvorgang und die Vermeidung von Anschlaggeräuschen kann es vorgesehen sein, daß die Zentralbereiche zumindest auf der dem Fluid zugewandten Seite jeweils zumindest einen Anschlag und/oder zumindest eine Dämpfungsvorrichtungen aufweisen. Die Dämpfungsvorrichtungen können durch Ausnehmungen innerhalb der Zentralbereiche gebildet sein. Bei maximaler Ein- bzw. Ausfederung bewirkt die Endlagendämpfung, daß bei Annäherung der Zentralbereiche an das Außenrohr das Fluid aus dem Ausnehmungen in die angrenzenden Kammern gefördert wird. In Abhängigkeit von den Gegebenheiten des Anwendungsfalles können die Ausnehmungen verschiedenartig gestaltet sein. Im vorliegenden Fall ist es vorgesehen, daß die Zentralbereiche sowohl Anschläge als auch Dämpfungsvorrichtungen aufweisen.

Nach einer anderen Ausgestaltung ist es vorgesehen, daß zumindest eine der fluidgefüllten Kammern mit einer Kompensationskammer flüssigkeitsleitend verbunden ist, daß die Verbindung durch einen Bypass gebildet ist und daß das Größenverhältnis Querschnitt Bypass zu Querschnitt Drosselkanal 1:5 bis 1:100 beträgt. Die Kompensationskammer ist zur quasi statischen Aufnahme wechselnder Fluidvolumina durch Temperatur- und/oder Montageschwankungen vorgesehen und über einen Bypass mit dem Hydrauliksystem verbunden. Die Kompensationskammer ist durch eine nahezu drucklos volumenaufnehmende Kammerwand begrenzt. Eine Erhöhung der dynamischen Federrate kann somit zuverlässig vermieden werden.

Nach einer weiteren Ausgestaltung ist es vorgesehen, daß die Zentralbereiche durch eine mechanische Verbindung in radialer Richtung relativ zueinander unverrückbar aneinander festgelegt sind. Hierbei ist von Vorteil, daß die Summe der Weite der beiden Spalte zwischen den Zentralbereichen und der inneren Stützhülse konstant gehalten werden und dadurch eine eindeutige Abkoppelung kleinamplitudiger Schwingungen vom dämpfenden Teil des Lagers gewährleistet sind.

Das Federelement kann im Bereich der inneren Stützhülse und der Zentralbereiche mittels Distanzstegen miteinander verbunden sein. Die Distanzstege sind zwischen der inneren Stützhülse und dem blähsteifen Zentralbereich der Kammerwände angeordnet, wobei die Länge der Stege so bemessen ist, daß sich nach dem herstellungsbedingten Schrumpfen die erforderliche Spaltbreite zwischen den einander zugewandten Oberflächen von Kammerwand und Federkörper einstellt.

Der Gegenstand der vorliegenden Erfindung wird nachfolgend anhand der Zeichnungen weiter erläutert. Diese zeigen die zu berücksichtigenden Einzelkomponenten teilweise in schematischer Darstellung.
Figur 1 zeigt eine Beispiel einer erfindungsgemäßen, entkoppelten Hydrobuchse in quergeschnittner Darstellung;
Figur 2 die Hydrobuchse aus Figur 1 in länggeschnittner Darstellung;
Figur 3 eine weitere Ausgestaltung der erfindungsgemäßen Hydrobuchse in quergeschnittner Darstellung, wobei die beiden Zentralbereiche durch eine mechanische Verbindung aneinander festgelegt sind;
Figur 4 die Hydrobuchse aus Figur 3 in längsgeschnittener Darstellung;
Figur 5 eine weitere Ausgestaltung der erfindungsgemäßen Hydrobuchse, wobei eine Kompensationskammer vorhanden ist und die Zentralbereiche der Kammerwände direkt mit dem den inneren Stützkörper umgebenden Federkörper verbunden sind.

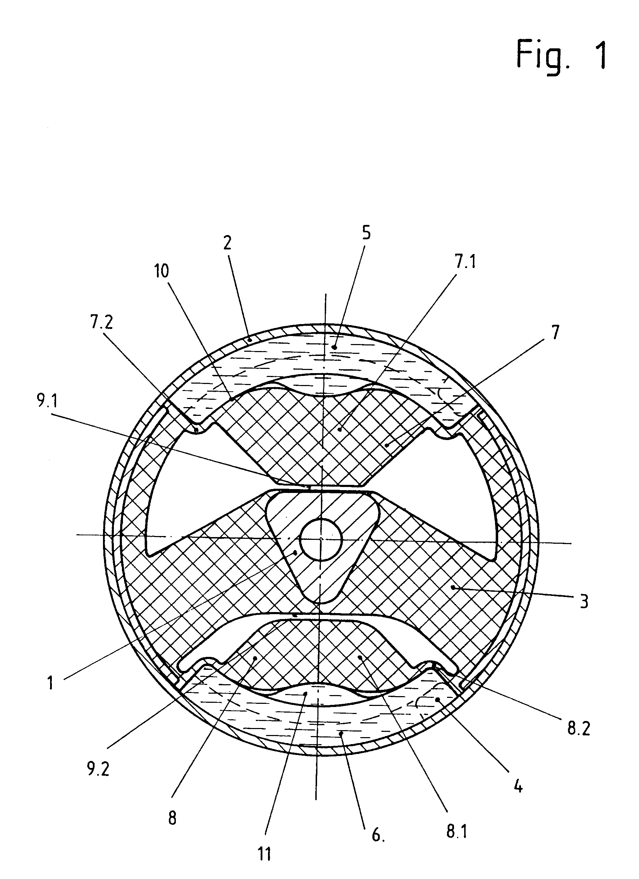

In den Figuren 1 bis 5 ist jeweils eine Zweikammerhydrobuchse gezeigt, die überwiegend senkrecht zu ihrer Achsrichtung belastbar ist. Die äußere Stützhülse 2 umschließt die innere Stützhülse 1 in achsparalleler Zuordnung, wobei die beiden Stützhülsen 1, 2 durch ein gummielastisches Federelement 3 aufeinander abgestützt sind. Die hier dargestellten Hydrobuchsen weisen im wesentlichen vier Kammern auf, wobei die beiden in radialer Richtung äußeren Kammern flüssigkeitsgefüllt und durch eine Verbindungsöffnung 4 in Form eines Kanals flüssigkeitsleitend miteinander verbunden sind. Zur Dämpfung tieffrequenter Schwingungen mit großen Amplituden ist es danach vorgesehen, daß im Dämpfungskanal enthaltene Flüssigkeit in gegenphasiger Resonanz zu der eingeleiteten, trieffrequenten Schwingung schwingt und dadurch eine Dämpfung bewirkt. Die in radialer Richtung innenliegenden Kammern weisen offene Stirnwände und keine Flüssigkeitsfüllung auf. Die die flüssigkeitsgefüllten Kammern von den luftgefüllten Kammern trennenden Kammerwände 7, 8 sind derart ausgestaltet, daß sie einen blähsteifen Zentralbereich 7.1, 8.1 aufweisen und rollbalgartig ausgeführte Randbereiche 7.2, 8.2 und daß die Kammerwände 7, 8 einstückig mit dem Federelement 3 ausgebildet sind. Zur Isolierung höher frequenter Schwingungen mit kleinen Amplituden ist zwischen den Zentralbereichen 7.1, 8.1 und der inneren Stützhülse 1 jeweils ein Spalt vorgesehen der sich in axialer Richtung erstreckt und eine radiale Weite von 0,5 mm aufweist.

In Figur 1 ist ein erstes Ausgestaltungsbeispiel der erfindungsgemäßen Hydrobuchse gezeigt. Die fluidgefüllten Kammern 5, 6 sind zwischen der äußeren Stützhülse 2 und den Kammerwänden 7, 8 angeordnet und über einen Drosselkanal 4 flüssigkeitsleitend miteinander verbunden. Der Drosselkanal erstreckt sich entlang der äußeren Stützhülse 2. Die innere Stützhülse 1 weist in diesem Fall ein polygonförmiges Profil auf. Die Festlegung des Federkörpers 3 an der inneren Stützhülse 1 ist dadurch vereinfacht. Die Zentralbereiche 7.1, 8.1 der Kammerwände 7, 8 weisen in Richtung der äußeren Stützhülse 2 Ausnehmungen in Form von Dämpfungsvorrichtungen 11 auf, die bei Extremauslenkungen von innerer Stützhülse 1 und äußerer Stützhülse 2 relativ zueinander wirksam werden. Mit zunehmender Annäherung der Zentralbereiche 7.1, 8.1 an die äußere Stützhülse 2 wird die Relativgeschwindigkeit der beiden Bauteile aufeinander zu verlangsamt und eine Endlagendämpfung bedingt. Anschlaggeräusche können dadurch zuverlässig vermieden werden. Bei der Ausgestaltung der membranartigen Randbereiche 7.2, 8.2 ist darauf zu achten, daß diese nicht durch Zug belastet werden. Durch diese Ausgestaltung ergibt sich eine wesentlich verbesserte Gebrauchsdauer.

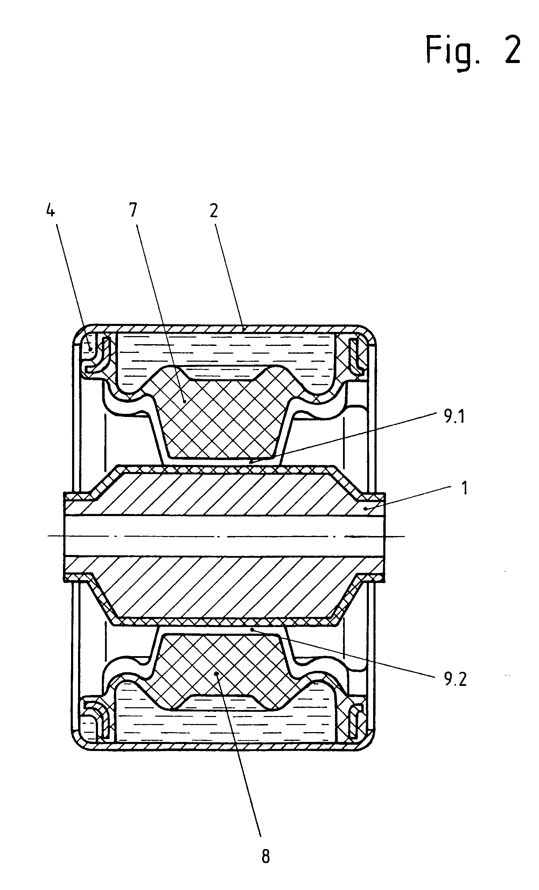

In Figur 2 ist die in Figur 1 gezeigte Hydrobuchse in längsgeschnittner Darstellung gezeigt. Sowohl die Dämpfungsvorrichtungen 11 in Form von Ausnehmungen innerhalb der Zentralbereiche 7.1, 8.1, als auch die Anschläge 10 sind in dieser Darstellung gut zu erkennen. Der Drosselkanal 4 erstreckt sich in diesem Beispiel zwischen der äußeren Stützhülse 2 und einer kanalartigen Ausnehmung innerhalb des Federkörpers 3. Bei der Flüssigkeit innerhalb der Fluidkammern 5, 6 handelt es sich zumeist um Wasser mit einem Gehalt an Frostschutz.

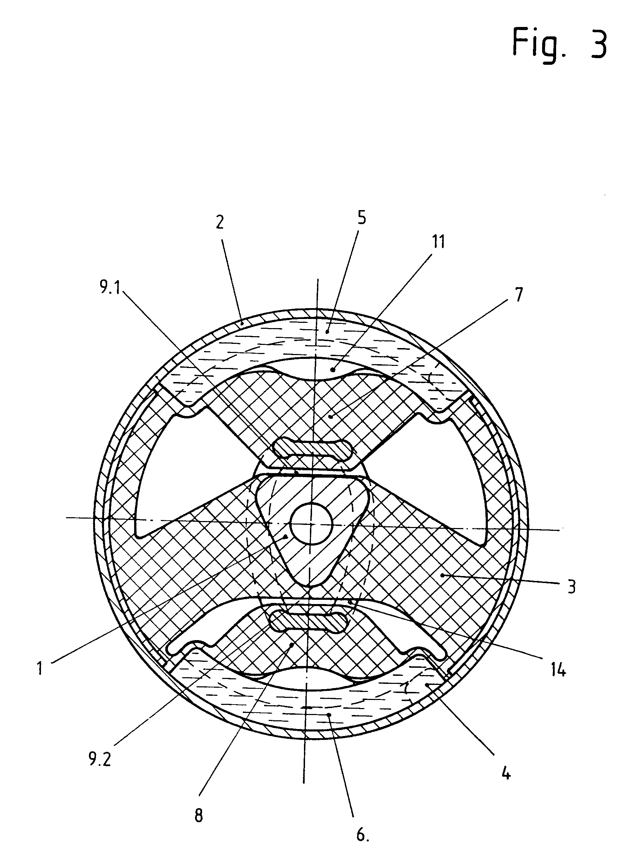

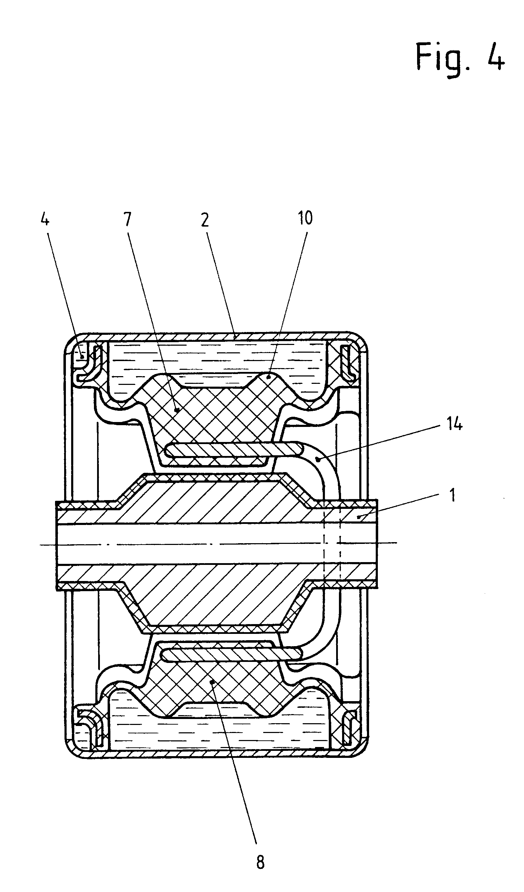

Die in Figur 3 gezeigte Hydrobuchse entspricht im wesentlichen der Hydrobuchse aus Figur 1, wobei die Zentralbereiche 7.1, 8.1 durch eine mechanische Verbindung 14 in radialer Richtung relativ zueinander unverrückbar aneinander festgelegt sind. Diese Ausgestaltung bedingt konstante Spalten 9.1, 9.2 zwischen den Zentralbereichen 7.1, 8.1 und der inneren Stützhülse 1 zur wirkungsvollen Abkoppelung kleinamplitudiger, hochfrequenter Schwingungen vom dämpfenden Teil des Lagers. Die mechanische Verbindung 14 kann beispielsweise durch ein in die Zentralbereiche 7.1, 8.1 einvulkanisiertes Blech gebildet sein, das die innere Stützhülse 1, wie in Figur 4 gezeigt umgreift.

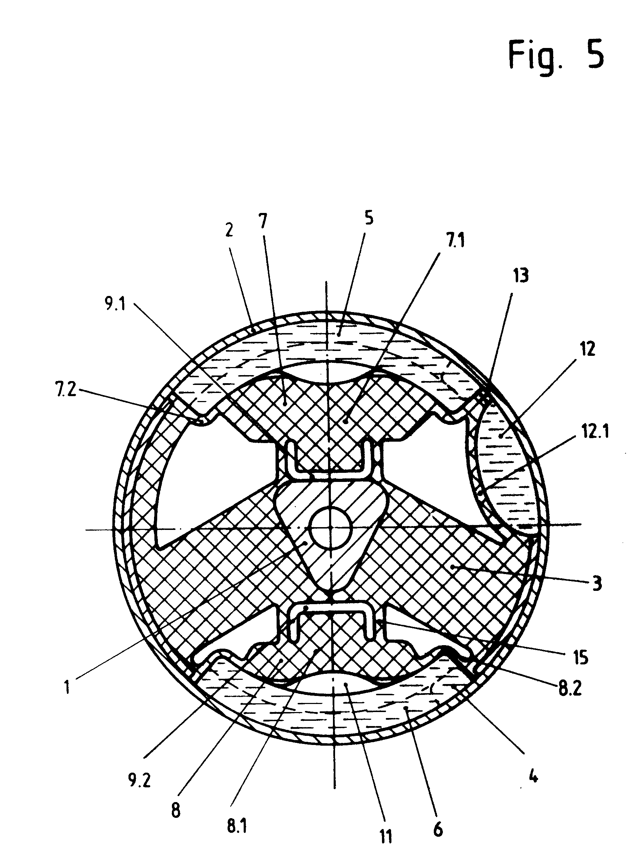

Die in Figur 5 gezeigte Hydrobuchse weist im Gegensatz zu den vorstehend beschriebenen Hydrobuchsen eine Kompensationskammer 12 auf, die flüssigkeitsleitend mit den Kammern 5, 6 verbunden ist. Die Verbindung der Kompensationskammer 12 zur den flüssigkeitsgefüllten Kammern 5, 6 erfolgt über einen Bypass, dessen Querschnitt im Vergleich zum Querschnitt des Drosselkanals 4 wesentlich verringert ist. Die Kompensationswand 12.1 ist in der Lage, Flüssigkeitsvolumen nahezu drucklos aufzunehmen und erstreckt sich in einen Bereich der luftgefüllten Kammern. Herstellungstoleranzen und die Verwendung der Hydrobuchse in unterschiedlichen Temperaturbereichen sind dadurch problemlos möglich. Außerdem ist der Federkörper 3 zur Isolierung hochfrequenter Schwingungen derart ausgebildet, daß Distanzstege 15 zwischen dem Federkörper 3 und den blähsteifen Zentralbereichen 7.1, 8.1 angeordnet sind. Die Länge der Stege ist so bemessen, daß sich nach dem herstellungsbedingten Schrumpfen das erforderliche Spiel, das heißt der Spalt 9.1 bzw. 9.2, zwischen den Zentralbereichen 7.1, 8.1 und der inneren Stützhülse 1 einstellt.

## Patentansprüche

1. Hydraulisch dämpfende Mehrkammer-Hydrobuchse, die überwiegend senkrecht zu ihrer Achsrichtung belastbar ist, umfassend zwei einander in achsparalleler Zuordnung umschließende Stützhülsen (1, 2), die durch zumindest ein Federelement (3) aus gummielastischem Werkstoff aufeinander abgestützt sind, wobei das Federelement (3) die innere Stützhülse (1) zumindest teilweise umschließt und zumindest zwei mit einem inkompressiblen Fluid gefüllte Kammern (5, 6) einander gegenüberliegend und im wesentlichen senkrecht zur Achsrichtung angeordnet sind, wobei die Kammern (5, 6) durch zumindest eine Verbindungsöffnung (4) flüssigkeitsleitend miteinander verbunden sind und jeweils durch die äußere Stützhülse (2) und eine bewegliche, der inneren Stützhülse (1) zugewandte Kammerwand (7, 8) gebildet sind, die jeweils einen blähsteifen Zentralbereich (7.1, 8.1) und einen Randbereich (7.2, 8.2) aufweisen und einstückig mit dem Federelement (6) ausgebildet sind, wobei die Zentralbereiche (7.1, 8.1) bei bestimmungsgemäßer Verwendung mit der inneren Stützhülse (1) jeweils einen Spalt (9.1, 9.2) begrenzen, der sich in axialer Richtung erstreckt, dadurch gekennzeichnet, daß die Randbereiche (7.2, 8.2) rollbalgartig ausgeführt sind und der jeweilige Spalt (9.1, 9.2) eine radiale Weite von maximal 1 mm aufweist, so daß die Randbereiche (7.2, 8.2) bei Ein- bzw. Ausfederung des Hydrolagers keiner Zugbelastung ausgesetzt sind.

2. Hydrobuchse nach Anspruch 1, dadurch gekennzeichnet, daß die fluidgefüllten Kammern (5, 6) weitgehend symmetrisch ausgebildet sind und über eine, im Bereich der äußeren Stützhülse (2) angeordnete Verbindungsöffnung (4) flüssigkeitsleitend miteinander verbunden sind.

3. Hydrobuchse nach Anspruch 1 bis 2, dadurch gekennzeichnet, daß die Zentralbereiche (7.1, 8.1) zumindest auf der dem Fluid zugewandten Seite jeweils zumindest einen Anschlag (10) und/oder Dämpfungsvorrichtungen (11) aufweisen.

4. Hydrobuchse nach Anspruch 3, dadurch gekennzeichnet, daß die Dämpfungsvorrichtungen (11) durch Ausnehmungen innerhalb der Zentralbereiche (7.1, 8.1) gebildet sind.

5. Hydrobuchse nach Anspruch 1 bis 4, dadurch gekennzeichnet, daß zumindest eine der fluidgefüllten Kammern (5, 6) mit einer Kompensationskammer (12) flüssigkeitsleitend verbunden ist, daß die Verbindung durch einen Bypass (13) gebildet ist und daß das Größenverhältnis Querschnitt Bypass (13) zu Querschnitt Drosselkanal (4) 1:5 bis 1:100 beträgt.

6. Hydrobuchse nach Anspruch 5, dadurch gekennzeichnet, daß die Kompensationskammer (12) durch eine nahezu drucklos volumenaufnehmende Kammerwand (12.1) begrenzt ist.

7. Hydrobuchse nach Anspruch 1 bis 6, dadurch gekennzeichnet, daß die Zentralbereiche (7.1, 8.1) durch eine mechanische Verbindung (14) in radialer Richtung relativ zueinander unverrückbar aneinander festgelegt sind.

8. Hydrobuchse nach Anspruch 1 bis 7, dadurch gekennzeichnet, daß das Federelement (3) im Bereich der inneren Stützhülse (1) und die Zentralbereiche (7.1, 8.1) mittels Distanzstegen (15) miteinander verbunden sind und daß sich zwischen den einander zugewandten Oberflächen nach dem herstellungsbedingten Schrumpfen die erforderliche Spaltbreite einstellt.

9. Hydrobuchse nach Anspruch 8, dadurch gekennzeichnet, daß die Distanzstege (15) einen bogenförmig gewölbten Querschnitt aufweisen.

## Claims

1. A hydraulically damping multi-chamber hydraulic bushing which can be subjected to load predominantly in a direction perpendicular to its axial direction, comprising two supporting sleeves (1, 2), the one surrounding the other in axially parallel association, which are supported upon one another by at least one spring element (3) made of rubber-elastic material, the spring element (3) at least partially surrounding the inner supporting sleeve (1), and at least two chambers (5, 6) filled with an incompressible fluid being arranged opposite one another and essentially perpendicular to the axial direction, the chambers (5, 6) being connected to one another in a manner which allows the passage of fluid by at least one connecting opening (4) and each being formed by the outer supporting sleeve (2) and a movable chamber wall (7, 8) facing the inner supporting sleeve (1), each chamber wall having a central area (7.1, 8.1) which is stiff in terms of expansion and a border area (7.2, 8.2) and being formed integrally with the spring element (6), the central areas (7.1, 8.1) each bounding with the inner supporting sleeve (1), during use as intended, a gap (9.1, 9.2) which extends in the axial direction, characterised in that the border areas (7.2, 8.2) are configured in the manner of rolling bellows and the respective gap (9.1, 9.2) has a radial width of at most 1 mm, with the result that the border areas (7.2, 8.2) are not subject to any tensile loading during inward or outward deflection of the hydraulic support.

2. A hydraulic bushing according to claim 1, characterized in that the fluid-filled chambers (5, 6) are of substantially symmetrical design and are connected to one another in a manner which allows the passage of fluid by a connecting opening (4) arranged in the region of the outer supporting sleeve (2).

3. A hydraulic bushing according to either of claims 1 and 2, characterized in that the central areas (7.1, 8.1) each have at least one stop (10) and/or damping devices (11), at least on the side facing the fluid.

4. A hydraulic bushing according to claim 3, characterized in that the damping devices (11) are formed by recesses within the central areas (7.1, 8.1).

5. A hydraulic bushing according to any of claims 1 to 4, characterized in that at least one of the fluid-filled chambers (5, 6) is connected to a compensation chamber (12) in a manner which allows the passage of fluid, in that the connection is formed by a bypass (13) and in that the size ratio of the cross-section of the bypass (13) to the cross-section of the flow restriction passage (4) is from 1:5 to 1:100.

6. A hydraulic bushing according to claim 5, characterized in that the compensation chamber (12) is bounded by a chamber wall (12.1) which takes up volume in a virtually unpressurized manner.

7. A hydraulic bushing according to any of claims 1 to 6, characterized in that the central areas (7.1, 8.1) are fixed on one another by a mechanical connection (14) in a manner which prevents them from being displaced in the radial direction relative to one another.

8. A hydraulic bushing according to any of claims 1 to 7, characterized in that the spring element (3) in the region of the inner supporting sleeve (1) and the central areas (7.1, 8.1) are connected to one another by means of distance webs (15) and in that the required gap width is established between the mutually facing surfaces after the shrinkage entailed by the production process.

9. A hydraulic bushing according to claim 8, characterized in that the distance webs (15) have a cross-section with an arc-shaped curvature.

## Revendications

1. Manchon hydraulique à plusieurs compartiments à effet amortisseur hydraulique, que l'on peut charger essentiellement verticalement par rapport à son sens axial, comportant deux tubes d'appui (1, 2) s'enveloppant mutuellement dans une disposition parallèle à l'axe, qui prennent appui l'un sur l'autre au moyen d'au moins un élément à ressort (3) constitué d'une matière gommeuse élastique, étant précisé que l'élément à ressort (3) enveloppe au moins partiellement le tube d'appui intérieur (1) et qu'au moins deux compartiments (5, 6) contenant un fluide incompressible sont disposés en regard et essentiellement verticalement par rapport au sens axial, les compartiments (5, 6) étant reliés entre eux par l'intermédiaire d'une ouverture de liaison (4) permettant l'écoulement du liquide et formés respectivement par le tube d'appui extérieur (2) et une paroi de compartiment (7, 8) mobile, tournée vers le tube d'appui intérieur (1), lesquels compartiments comportent respectivement une zone centrale (7.1, 8.1) résistante au gonflement et une zone périphérique (7.2, 8.2) et forment un monobloc avec l'élément à ressort (6), les zones centrales (7.1, 8.1), lorsqu'elles sont utilisées de manière adéquate, délimitant avec le tube d'appui intérieur (1) respectivement une fente (9.1, 9.2) qui s'étend dans le sens axial, caractérisé en ce que les zones périphériques (7.2, 8.2) sont réalisées à la manière d'un soufflet et la fente respective (9.1, 9.2) présente une largeur radiale de 1 mm au plus, si bien que les zones périphériques (7.2, 8.2) ne sont exposées à aucune charge de traction lors du rabattement ou débattement du palier hydraulique.

2. Manchon hydraulique selon la revendication 1, caractérisé en ce que les compartiments (5, 6) contenant le fluide sont essentiellement symétriques et reliés entre eux par l'intermédiaire d'une ouverture de liaison (4) disposée au niveau du tube d'appui extérieur (2) de manière à permettre l'écoulement du liquide.

3. Manchon hydraulique selon l'une des revendications 1 ou 2, caractérisé en ce que les zones centrales (7.1, 8.1) comportent au moins sur le côté orienté vers le fluide respectivement au moins une butée (10) et/ou des dispositifs amortisseurs (11).

4. Manchon hydraulique selon la revendication 3, caractérisé en ce que les dispositifs amortisseurs (11) sont formés par des évidements ménagés à l'intérieur des zones centrales (7.1, 8.1).

5. Manchon hydraulique selon l'une des revendications 1 à 4, caractérisé en ce qu'au moins l'un des compartiments (5, 6) contenant le fluide communique avec un compartiment de compensation (12) de manière à permettre l'écoulement du liquide, en ce que la liaison est établie au moyen d'un by-pass (13) et en ce que le rapport section by-pass (13)/section canal d'étranglement (4) est compris entre 1 à 5 et 1 à 100.

6. Manchon hydraulique selon la revendication 5, caractérisé en ce que le compartiment de compensation (12) est délimité par une paroi de compartiment (12.1) qui absorbe du volume sensiblement sans pression.

7. Manchon hydraulique selon l'une des revendications 1 à 6, caractérisé en ce que les zones centrales (7.1, 8.1) sont positionnées l'une par rapport à l'autre dans le sens radial de manière fixe au moyen d'un raccord mécanique (14).

8. Manchon hydraulique selon l'une des revendications 1 à 7, caractérisé en ce que l'élément à ressort (3) au niveau du tube d'appui intérieur (1) et les zones centrales (7.1, 8.1) sont reliés entre eux au moyen d'entretoises d'écartement (15) et en ce que la largeur nécessaire apparaît entre les surfaces placées en regard à la suite de la rétraction due à la fabrication.

9. Manchon hydraulique selon la revendication 8, caractérisé en ce que les entretoises d'écartement (15) présentent une section voûtée en forme d'arc.
